# EUROPÄISCHE PATENTSCHRIFT

(11) **EP 0 831 265 B1**
(45) Veröffentlichungstag und Bekanntmachung des Hinweises auf die Patenterteilung: **11.04.2001**
(21) Anmeldenummer: 97116055.1
(22) Anmeldetag: 16.09.1997
(51) Int. Cl.: F16L 23/028

(54) **Flanscharmatur**
Flanged armature
Armature à collerette

(30) Priorität: 18.09.1996 DE 19638053; 21.12.1996 DE 19653950
(43) Veröffentlichungstag der Anmeldung: 25.03.1998
(73) Patentinhaber: Interhydraulik Gesellschaft für Hydraulikkomponenten mbH, 59348 Lüdinghausen (DE)
(72) Erfinder: Hirsch, Wolfgang, 59394 Nordkirchen (DE); Barth, Wolfgang, 34359 Reinharshagen (DE)
(74) Vertreter: Spannagel, Hans-Achim

(56) Entgegenhaltungen:
- WO-A-78/00004
- FR-A- 1 555 582
- FR-A- 2 157 561
- GB-A- 759 718
- US-A- 2 131 553
- US-A- 2 303 311
- US-A- 2 812 959
- US-A- 3 224 795
- US-A- 4 503 680
- US-A- 5 511 826
- US-A- 5 518 275

## Beschreibung

Die Erfindung betrifft eine Flanscharmatur gemäß gattungsbildendem Teil des ersten Patentanspruches.

Allgemeiner St.d.T. ist es, Hydraulikpumpen, insbesondere Zahnradpumpen, mit größerem Fördervolumen saugseitig mit einem in der Regel genormten Anschlußbild (Lochkreisdurchmesser) vorzusehen. Die zum Anschluß von insbesondere Schlauchleitungen eingesetzten handelsüblichen Flanschanschlüsse sind eine praktizierte, jedoch nicht immer optimale Lösung.

Pumpen mit großem Fördervolumen verlangen in der Regel eine optimale Ölversorgung bei geringstmöglichem Unterdruck auf der Saugseite. Nur durch diese Art der Versorgung kann eine lange Lebensdauer sichergestellt werden. Die bisher zum Einsatz gelangten Anschlußelemente erlauben zwar den Einsatz von Leitungen mit großem Querschnitt, wobei jedoch bei genauer Betrachtung der Flansche festzustellen ist, daß unmittelbar vor dem Pumpensaugmund bauartbedingte Querschnittsverengungen von teilweise 50 % und mehr nicht ungewöhnlich sind. Der Vorteil einer gut dimensionierten Leitung wird somit im Anschlußbereich wieder aufgehoben, was letztendlich zur Notwendigkeit einer größeren Pumpenleistung führt. Infolge dieser Querschnittsverengung im Anschlußbereich treten durch den sich einstellenden Düseneffekt unerwünschte Temperaturerhöhungen und Verwirbelungen des Hydraulikmediums auf, was letztendlich auch zu einem frühzeitigen Ausfall der Flanscharmatur führen kann (z.B. durch Kavitation oder zu hohe Temperatur).

Üblicherweise wird die Flanscharmatur mit vier Schrauben, die auf dem Lochkreisdurchmesser vorsehbar sind, mit der jeweiligen Hydraulikpumpe verbunden. Diese Vierlochbefestigung läßt nur vier definierte Anschlußrichtungen (90°, 180°, 270°, 360° zur Pumpenachse) der ankommenden Leitung zu, wodurch sich je nach Anordnung der Pumpe Probleme bei der Befestigung der Flanscharmatur einstellen können. Mit in der Regel ebenfalls notwendigen zusätzlichen Verschraubungen, u.a. im Bereich der Schlauch- bzw. Rohrleitungsbefestigung, wird der Zugang zu diesen Anschlüssen mit Schlüsselweiten von SW 36 bis SW 55 noch erschwert. Häufig sind hierbei Leckagen die Folge, da die Verschraubungen nicht ordnungsgemäß angezogen werden können.

Die GB- C 759 718 betrifft einen Rohrflansch, bei welchem auf ein Rohrende ein Flanschelement mit Radialansatz bündig aufgesteckt wird. In einer Ausnehmung des Flanschelementes befindet sich eine Ausnehmung, innerhalb derer ein Dichtring angeordnet ist. Im nicht montierten Zustand ist das Flanschelement gegenüber dem Rohrende beweglich vorgesehen, was jedoch aufgehoben wird, sobald das Rohrende in Richtung des Flanschelementes aufgeweitet wird. Für die Montage dieser Flanschverbindung ist demzufolge keinerlei Einstellbarkeit in Umfangsrichtung mehr gegeben.

Der FR- A 21 57 561 ist eine Flanscharmatur zu entnehmen, die ein Flanschelement beinhaltet. Des weiteren ist ein konisches Aufnahmeelement zur Aufnahme des Flanschelementes vorgesehen, wobei radial zwischen den beiden Bauteilen ein definierter Spalt gegeben ist. Ein Übergangsbereich ist hier nicht gegeben, da das Aufnahmeelement - mit Ausnahme des konischen Bereiches - zylindrisch verläuft, d. h. keine gekrümmten Bereiche aufweist. Infolge des Spaltes ist jedoch eine Relativdrehbarkeit der beiden Bauteile zueinander gegeben, wobei keinerlei Arrerierungsmöglichkeiten des Flanschelementes gegenüber dem Aufnahmeelement vorhanden sind, d. h. bei unsachgemäßer Handhabung oder unsachgemäßem Transport Bauteilverluste oder Beschädigungen nicht ausgeschlossen werden können.

Ziel des Erfindungsgegenstandes ist es, die Nachteile des St.d.T. zu überwinden und eine Flanscharmatur weiterzubilden, die einfach handhabbar und auch bei beengten Raumverhältnissen variabel einsetzbar ist, ohne daß ein erhöhter Montage- und Mehrkostenaufwand damit verbunden ist.

Dieses Ziel wird durch die Merkmale des ersten Patentanspruches erreicht.

Vorteilhafte Weiterbildungen des Erfindungsgegenstandes sind den Unteransprüchen zu entnehmen.

Mit dem Erfindungsgegenstand ist es möglich, eine relative Beweglichkeit der einzelnen Komponenten der Flanscharmatur gegenüber damit zu verbindenden Bauteilen, insbesondere Pumpen, zu erzeugen, die eine wesentlich einfachere Handhabung als beim bisher bekannten St.d.T. ermöglicht. Die Flanscharmatur ist sowohl für Schläuche als auch für Rohre verwendbar, wobei unterschiedlichste Anschlußmöglichkeiten insbesondere im Bereich des Aufnahmebereiches realisiert werden können. So können beispielsweise Schlauchenden auf einen profilierten Aufnahmebereich entweder nur aufgesteckt oder mittels Schlauchklemmen dort festgelegt werden, oder aber es können Rohrleitungsenden am Übergangsbereich oder unmittelbar am Flanschbereich beispielsweise festgelötet werden. Desweiteren besteht auch die Möglichkeit, Gewindestücke entweder unmittelbar am Übergangsbereich oder aber am Flanschbereich vorzusehen, um hier Schlauch- oder Rohrenden mittels Überwurfmuttern oder dgl. zu befestigen.

Der Erfindungsgegenstand ist vielseitig einsetzbar und erlaubt gegenüber dem St.d.T. eine einfache Montage an korrespondierenden Bauteilen, insbesondere an Pumpen, wie Zahnradpumpen oder dgl., da eine relative Beweglichkeit der Einzelkomponenten der Flanscharmatur gegeneinander und gegenüber den korrespondierenden Bauteilen gegeben ist.

Infolge der relativen, insbesondere Drehbeweglichkeit des Flanschbereiches gegenüber dem verbleibenden Schlauch- bzw. Rohrleitungsbereich oder umgekehrt, kann nunmehr eine variable Anpassung an örtliche Gegebenheiten hergestellt werden, wodurch sich letztendlich ein vereinfachter Montageaufwand der Flanscharmatur selber sowie des ggf. damit in Wirkverbindung zu bringenden Schlauches/Rohres auch unter beengten Einbaubedingungen einstellt.

Die Vorteile des Erfindungsgegenstandes gegenüber dem bisherigen St.d.T. sind im wesentlichen darin begründet, daß ein optimaler Durchfluß des Hydraulikmediums unter Vermeidung von Drosselstellen bei gleichem Anschluß möglich ist. Die Abgangsrichtung des Schlauch- bzw. Rohrleitungsbereiches ist frei einstellbar und zwar in beiden Drehrichtungen zwischen 0 und 360°, wobei auch eine axiale Relativbeweglichkeit zumindest des Flanschbereiches gegenüber dem Übergangsbereich gegeben ist. Der Montageaufwand ist wie bereits dargelegt als gering anzusehen, wobei beispielsweise auch der Schlauch- bzw. der Rohranschluß unmittelbar integriert werden kann. Zu diesem Zweck ist der Aufnahmebereich entweder aus verschiedenen Einzelteilen gebildet, die beispielsweise ineinandersteckbar und vorzugsweise durch Hartlöten miteinander verbindbar sind, oder aber die Anschlußbereiche sind unmittelbar am Flanschbereich bzw. am Übergangsbereich vorgesehen. Auch die Bauhöhe kann gegenüber dem St.d.T. reduziert werden, da keine komplizierten Schmiedeteile mehr zum Einsatz gelangen. Durch diese Maßnahme stellt sich ebenfalls eine reduzierten Kostenaufwand ein.

Der Erfindungsgegenstand ist anhand eines Ausführungsbeispieles in der Zeichnung dargestellt und wird wie folgt beschrieben. Es zeigen:
- Figur 1 -: perspektivische Darstellung der erfindungsgemäßen Flanscharmatur
- Figur 2 -: Schnitt durch Figur 1
- Figuren 3 bis 5 -: Prinzipskizzen unterschiedlicher Anschlußmöglichkeiten
- Figur 6 -: Teildarstellung des relativ beweglichen Flanschbereiches.

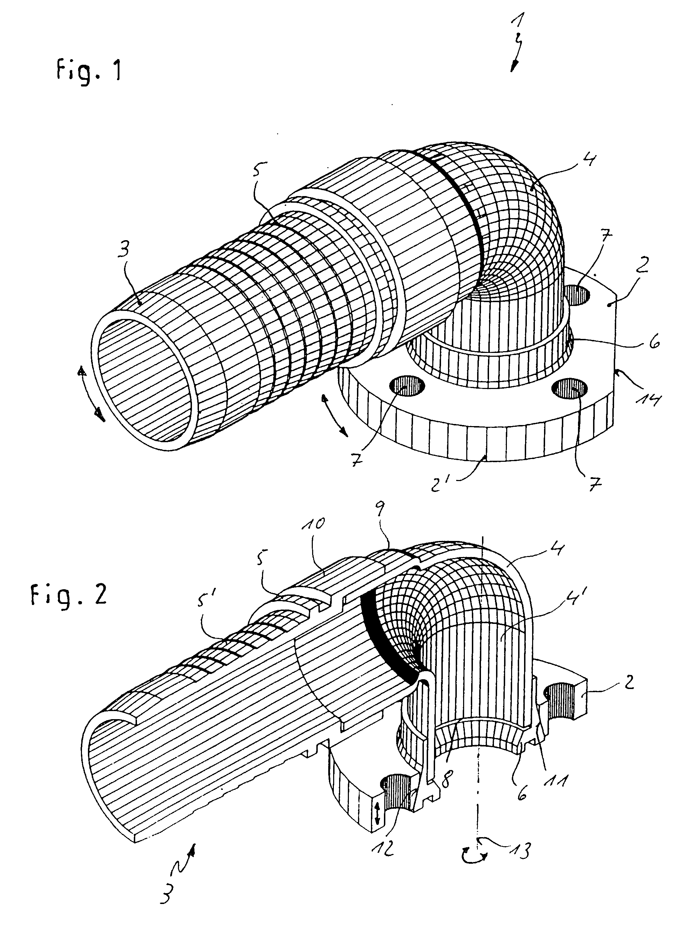

Figur 1 zeigt eine Flanscharmatur 1, die beispielsweise für den saugseitigen Anschluß an eine nicht weiter dargestellte Zahnradpumpe zum Einsatz gelangen kann. Die Flanscharmatur 1 beinhaltet einen Flanschbereich 2, einen Anschlußbereich 3 sowie einen Übergangsbereich 4. Der Aufnahmebereich 3 sowie der Übergangsbereich 4 werden unter Vorgabe entsprechender Toleranzen ineinandergesteckt und vorzugsweise durch Hartlöten miteinander verbunden. Der Übergangsbereich 4 ist hierbei im Querschnitt kreisbogenförmig ausgebildet, während der Aufnahmebereich 3 im wesentlichen zylindrisch ist. Der Aufnahmebereich 3 ist in diesem Beispiel mit einem Profil 5 versehen, auf welches ein nicht weiter dargestellter Hydraulikschlauch aufgeschoben und beispielsweise mit handelsüblichen Schlauchschellen oder Pressfassungen dort festgelegt werden kann. Der Flanschbereich 2 ist mit dem Übergangsbereich 4 nicht fest verbunden, sondern relativ zu diesem in Umfangsrichtung (Pfeilrichtung) sowie in axialer Richtung beweglich vorgesehen. Damit der Flanschbereich 2 nicht vom Übergangsbereich 4 abrutschen kann, ist ein weiteres hülsenartiges Bauteil 6 vorgesehen, welches im Anschluß an das Aufschieben des Flanschbereiches 2 auf den Übergangsbereich 4 und zwar auf dessen Endbereich aufgesteckt und beispielsweise durch Hartlöten mit demselben verbunden werden kann. Der Flanschbereich 2 ist zur Anpassung an üblicherweise vorgesehene Anschlußbilder im Pumpenbereich mit mehreren Durchgangsbohrungen 7 versehen, die auf einem in der Regel genormten Lochkreisdurchmesser vorgesehen sind. Die äußere Umfangsfläche 2' des Flanschbereiches 2 ist zum vereinfachten Anschluß an eine Pumpe mit einem geradlinig verlaufenden Bereich 14 versehen.

Figur 2 zeigt einen Schnitt durch Figur 1, wobei folgende Bauteile erkennbar sind: der Flanschbereich 2, der Übergangsbereich 4 sowie der Aufnahmebereich 3 samt profiliertem Bereich 5' für den nicht weiter dargestellten Hydraulikschlauch. Femer erkennbar ist das hülsenartige Bauteil 6, welches im Bereich der Stirnfläche 8 des Übergangsbereiches 4 aufgesteckt und vorzugsweise durch Hartlöten mit demselben verbunden ist. Der Übergangsbereich 4 sowie der Aufnahmebereich 3 sind mit entsprechenden Übergangsstücken 9,10 versehen, die unter Einhaltung vorgegebener Toleranzen ineinandersteckbar und wie bereits angesprochen durch Hartlöten miteinander verbindbar sind. Das hülsenförmige Abschlußteil 6 weist eine nach außen sich konisch erweiternde Umfangsfläche 11 auf, die gegenüber der ebenfalls konisch gestalteten inneren Umfangsfläche 12 des Flanschbereiches 2 so dimensioniert ist, daß der Flanschbereich 2 einerseits in Umfangsrichtung drehbeweglich ist und andererseits eine definierte axiale Beweglichkeit gegenüber dem Übergangsbereich 4 aufweist. Gleiches gilt natürlich auch für den Aufnahmebereich 3, der im Anschluß an die Positionierung des Flanschbereiches 2 um 360° in beiden Umfangsrichtungen um die Achse 13 geschwenkt werden kann, so daß ein problemloses Aufstecken des nicht weiter dargestellten Schlauches auch in beengten Einbauzonen herbeigeführt werden kann. Unter Verwendung eines im Querschnitt etwa kreisbogenförmig ausgebildeten Übergangsbereiches 4 kann über den gesamten Durchflußbereich 4'hinweg ein im wesentlichen gleichmäßiger Durchflußquerschnitt ohne Engstellen realisiert werden, so daß eine optimale Anpassung an die zu verwendenden Schläuche herbeigeführt werden kann. Infolge dieses optimierten Querschnittsprofils im Durchflußbereich 4' kann ggf. auch die zum Einsatz gelangende Pumpe kleiner gewählt werden, wobei gleichzeitig Störungen in diesem Bereich 4' (Kavitation, erhöhte Temperatur oder dgl.) vermieden werden.

Infolge der relativen Drehbeweglichkeit des Flanschbereiches 2 gegenüber dem Übergangsbereich 4 bzw. umgekehrt, können eine Vielzahl von Anschluß- und Bewegungsmöglichkeiten innerhalb beengter Bauräume realisiert werden, die zu einer nicht unerheblichen Montagevereinfachung gegenüber den damit zu verbindenden Bauteilen (Pumpen, Schläuche, Rohre oder dgl.) führen.

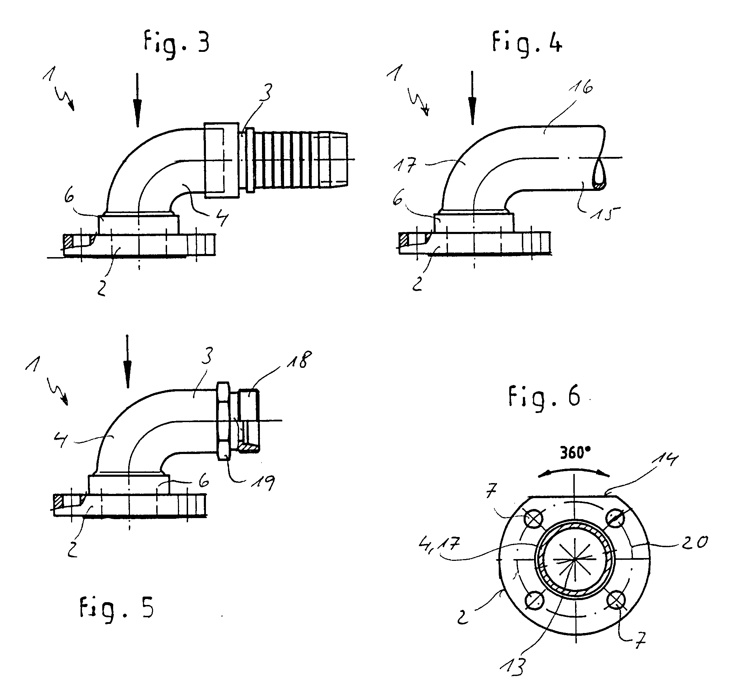

Die Figuren 3 bis 5 zeigen die erfindungsgemäße Flanscharmatur 1 für unterschiedliche Aufnahmemöglichkeiten von Schläuchen, Rohren oder dgl.

Figur 3 entspricht im wesentlichen den bereits angesprochenen Figuren 1 und 2. Erkennbar sind der Flanschbereich 2, der Übergangsbereich 4 sowie der profilierte Aufnahmebereich 3 für einen nicht weiter dargestellten Hydraulikschlauch. Ferner erkennbar ist das hülsenartige Bauteil 6, das mit dem Übergangsbereich 4 verbunden ist. Ein Herabfallen des Flanschbereiches 2 vom hülsenartigen Bauteil 6 wird dadurch vermieden, daß - wie dies insbesondere Figur 2 zu entnehmen ist - entgegengesetzt konisch ausgebildete Bereiche vorgesehen sind.

Figur 4 zeigt eine Alternative, wobei folgende Bauteile erkennbar sind: der Flanschbereich 2 sowie das hülsenartig ausgebildete Bauteil 6. Abweichend zu Figur 3 ist in Figur 4 ein Rohrieitungsanschluß 15 vorgesehen, der aus einem geradlinig verlaufenden Bereich 16 in einen gekrümmt verlaufenden Übergangsbereich 17 ausläuft. Dieser Übergangsbereich 17 ist wie bereits in Figur 3 beschrieben mit dem hülsenartigen Bauteil 6 durch Hartlöten verbunden.

Figur 5 zeigt eine weitere Alternative, wobei auch hier folgende Bauteile erkennbar sind: der Flanschbereich 2, das hülsenartige Bauteil 6, der Übergangsbereich 4 sowie der Anschlußbereich 3. Der Anschlußbereich 3 beinhaltet ein Abschlußelement 18, auf welches ein mit einem Außengewinde (nicht dargestellt) versehenes Schlauch- oder Rohrende aufgesteckt und mit der Überwurfmutter 19 verbunden werden kann.

Figur 6 zeigt eine Teildarstellung des Flanschbereiches 2. Erkennbar ist der geradlinig verlaufende Bereich 14 sowie die auf einem vorgegebenen Lochkreisdurchmesser 20 angeordneten Durchgangsbohrungen 7. Die relative Drehbeweglichkeit des Flanschbereiches 2 gegenüber dem Übergangsbereich 4 bzw. 17 um die Achse 13 ist durch den Pfeil angedeutet.

## Patentansprüche

1. Flanscharmatur, insbesondere für den saugseitigen Anschluß an eine Pumpe, wie eine Zahnradpumpe oder dgl., mit einem an einem Bauteil, insbesondere eine Pumpe, anschließbaren Flanschbereich (2), einem Übergangsbereich (4,17) sowie einem Aufnahmebereich (3,15) für das Medium weiterführende Bauteile, wobei der Flanschbereich (2) relativ zum Übergangsbereich (4, 17) bzw. der in Wirkverbindung mit dem Übergangsbereich (4, 17) stehende Aufnahmebereich (3, 15) relativ zum Flanschbereich (2) beweglich ist, und wobei der Flanschbereich (2) um mindestens 360° in beiden Umfangsrichtungen um seine Längsachse (13) gegenüber dem Übergangsbereich (4,17) beweglich ist, dadurch gekennzeichnet, daß der Übergangsbereich (4,17) im Bereich seines freien Endes mit einem etwa hülsenartigen Abschlußteil (6) versehen ist, daß der Flanschbereich (2) in gesicherter, d.h. unverlierbarer Form gegenüber dem Übergangsbereich (4,17) gehalten ist, und daß das Abschlußteil (6) eine nach außen sich konisch erweiternde Umfangsfläche (11) aufweist, die gegenüber der ebenfalls konisch gestalteten inneren Umfangsfläche (12) des Flanschbereiches (2) so dimensioniert ist, daß der Flanschbereich (2) einerseits in Umfangsrichtung drehbeweglich ist und andererseits eine definierte axiale Beweglichkeit gegenüber dem Übergangsbereich (4) aufweist.

2. Flanscharmatur nach Anspruch 1, dadurch gekennzeichnet, daß der Übergangsbereich (4,17) gekrümmt, insbesondere bogenartig ausgebildet ist und über seine Bogenlänge gesehen, mit einem im wesentlichen gleichmäßigen Durchflußquerschnitt (4) versehen ist, und daß die innere Umfangsfläche des Übergangsbereiches (4,17) glattwandig ausgebildet ist.

3. Flanscharmatur nach Anspruch 1 oder 2, dadurch gekennzeichnet, daß der Übergangsbereich (4,17) aufnahmeseitig mit einem etwa kragenartig ausgebildeten Übergangsstück (9) versehen ist.

4. Flanscharmatur nach einem der Ansprüche 1 bis 3, dadurch gekennzeichnet, daß der Aufnahmebereich (3) im Bereich des Übergangsbereiches (4,17) mit einem etwa kragenartigen Übergangsstück (10,18) versehen ist.

5. Flanscharmatur nach einem der Ansprüche 1 bis 4, dadurch gekennzeichnet, daß der Aufnahmebereich (3) im wesentlichen zylindrisch ausgebildet ist und einen ggf. profilierten Ansatz (5,5',18) zur Festlegung eines Schlauch- oder Rohrendes beinhaltet.

6. Flanscharmatur nach einem der Ansprüche 1 bis 4, dadurch gekennzeichnet, daß der Aufnahmebereich (3) im wesentlichen zylindrisch ausgebildet ist und einen Ansatz (18) samt Überwurfmutter (19) zur Verbindung mit einem entsprechend ausgebildeten Schlauch- bzw. Rohrende beinhaltet.

7. Flanscharmatur nach einem der Ansprüche 1 bis 6, dadurch gekennzeichnet, daß das hülsenartige Abschlußteil (6) in Verbindung mit dem Flanschbereich (2) unmittelbar am Ende eines Rohrleitungsanschlusses (15) vorgesehen ist.

## Claims

1. Flanged armature, in particular for the connection to the suction side of a pump, such as a gear pump or the like, comprising a flange portion (2), which is connectable to a component, in particular a pump, a transition portion (4, 17) as well as a receiving portion (3, 15) for components continuing the medium, wherein the flange portion (2) is movable relatively to the transition portion (4, 17) respectively the receiving portion (3, 15) being in active relation with the transition portion (4, 17) is movable relatively to the flange portion (2), and wherein the flange portion (2) is movable by at least 360° around its longitudinal axis (13) in both circumferential directions with respect to the transition portion (4, 17), characterized in that the transition portion (4, 17) is provided with a nearly sleeve type end part (6) in the region of its free end, that the flange portion (2) is maintained in secured, i.e. unlosable form with respect to the transition portion (4, 17) and that the end part (6) comprises a circumferential surface (11) flaring outwards, which is dimensioned with respect to the inner, also cone shaped circumferential surface (12) of the flange portion (2), so that the flange portion (2) is on the one hand rotatable in circumferential direction and on the other hand comprises a defined axial movability with respect to the transition portion (4).

2. Flanged armature according to claim 1, characterized in that the transition portion (4, 17) is curved, in particular arcuated, and provided with a substantially uniform flow cross section (4), seen over its arc length, and that the inner circumferential surface of the transition portion (4, 17) is formed with smooth walls.

3. Flanged armature according to one of the claims 1 or 2, characterized in that the transition portion (4, 17) is provided with a nearly collar formed transition piece (9) on its receiving side.

4. Flanged armature according to one of the claims 1 through 3, characterized in that the receiving portion (3) is provided with a nearly collar formed transition piece (10, 18) in the region of the transition portion (4, 17).

5. Flanged armature according to one of the claims 1 through 4, characterized in that the receiving portion (3) is substantially formed as a cylinder and includes a neck (5, 5', 18), which is in case profiled, for fixing a hose or tube end.

6. Flanged armature according to one of the claims 1 through 4, characterized in that the receiving portion (3) is substantially formed as a cylinder and includes a neck (18) including a union nut (19) for the connection with a correspondingly formed hose or tube end.

7. Flanged armature according to one of the claims 1 through 6, characterized in that the sleeve type end part (6) in connection with the flange portion (2) is immediately provided at the end of a pipeline connection (15).

## Revendications

1. Armature à collerette, notamment pour la connexion au côté d'aspiration d'une pompe, telle qu'une pompe à engrenages ou semblable, comprenant une zone de collerette (2) raccordable à un composant, notamment une pompe, une zone de transition (4, 17) ainsi qu'une zone de réception (3, 15) des composants continuant le médium, la zone de collerette (2) étant mobile par rapport à la zone de transition (4, 17) respectivement la zone de réception (3, 15) se trouvant en relation active avec la zone de transition (4, 17) étant mobile par rapport à la zone de collerette (2), la zone de collerette (2) étant mobile par au moins 360° autour de son axe longitudinal (13) dans les deux directions circonférentielles par rapport à la zone de transition (4, 17), caractérisée en ce que la zone de transition (4, 17) est munie d'une partie terminale (6) sensiblement sous forme d'un manchon dans la région de son extrémité libre, en ce que la zone de collerette (2) est maintenue de manière assurée, c.-à-d. non perdable, par rapport à la zone de transition (4, 17) et en ce que la partie terminale (6) comprend une surface circonférentielle (11), qui s'évase vers l'extérieur, et qui est dimensionée par rapport à la surface circonférentielle (12) intérieure et aussi taillée en cône de sorte que la zone de collerette (2) est d'une part rotable dans la direction circonférentielle et comprend d'autre part une mobilité axiale définie par rapport à la zone de transition (4).

2. Armature à collerette selon la revendication 1, caractérisée en ce que la zone de transition (4, 17) est courbée, notamment sous forme d'un arc, et, vu sur sa longueur d'arc, munie d'une section transversale de passage (4) essentiellement uniforme, et en ce que la surface circonférentielle intérieure de la zone de transition (4, 17) est formée avec des parois lisses.

3. Armature à collerette selon la revendication 1 ou 2, caractérisée en ce que la zone de transition (4, 17) est munie, du côté de réception, d'une pièce de transition (9) sensiblement sous forme d'un col.

4. Armature à collerette selon l'une des revendications 1 à 3, caractérisée en ce que la zone de réception (3) est munie d'une pièce de transition (10, 18) sensiblement sous forme d'un col dans la région de la zone de transition (4, 17).

5. Armature à collerette selon l'une des revendications 1 à 4, caractérisée en ce que la zone de réception (3) présente essentiellement la forme d'un cylindre et comprend un embout (5, 5', 18), qui est, le cas échéant, profilé, pour fixer la fin d'un tuyau flexible ou d'un tuyau.

6. Armature à collerette selon l'une des revendications 1 à 4, caractérisée en ce que la zone de réception (3) présente essentiellement la forme d'un cylindre et comprend un embout (18), un écrou-raccord (19) y compris, pour le raccord à une fin de tuyau flexible respectivement de tuyau formée de manière correspondante.

7. Armature à collerette selon l'une des revendications 1 à 6, caractérisée en ce que la partie terminale (6) du type d'un manchon en combinaison avec la zone de collerette (2) est directement prévue à la fin d'un raccord de tuyauterie (15).
